# FASCICULE DE BREVET EUROPEEN

(11) **EP 0 765 076 B1**
(45) Date de publication et mention de la délivrance du brevet: **30.10.2002**
(21) Numéro de dépôt: 96202557.3
(22) Date de dépôt: 12.09.1996
(51) Int. Cl.: H04N 3/27, H04N 3/233

(54) **Circuit de balayage horizontal de télévision muni d'une capacité de S commutée par un thyristor**
Horizontalablenkschaltung mit über einen Thyristor eingeschaltetem S-Kondensator
Horizontal deflection circuit with S-capacitor switched by thyristor

(30) Priorité: 20.09.1995 FR 9511035
(43) Date de publication de la demande: 26.03.1997
(73) Titulaire: Koninklijke Philips Electronics N.V., 5621 BA Eindhoven (NL)
(72) Inventeur: Vingtrois, Régis, 75008 Paris (FR)
(74) Mandataire: Charpail, François

(56) Documents cités:
- DE-A- 2 655 946
- US-A- 4 101 814

## Description

La présente invention concerne un circuit de balayage horizontal, dit modulateur à diodes, pour un appareil d'affichage d'images, comprenant un élément interrupteur principal semi-conducteur avec une borne active et une borne connectée à la masse, en parallèle avec deux diodes connectées en cascade en sens inverse par rapport au sens direct de l'élément interrupteur principal, muni d'une première branche connectée entre la borne active de l'élément interrupteur principal et la masse, faite du montage en cascade d'un bobinage déviateur, d'une première capacité dite de S et d'une self-inductance, et muni d'une seconde branche, faite du montage en cascade d'une capacité de S additionnelle et d'un thyristor pour mettre en service ou non cette capacité de S additionnelle.

L'invention s'applique, entre autres, pour la mise en service ou non d'une capacité additionnelle de S, dans le but de corriger les parties latérales d'une image de télévision de format 4/3, présentée sur un écran de format 16/9e, moyennant une action simultanée sur l'amplitude de balayage à l'aide du modulateur à diodes.

Un circuit de balayage horizontal selon le préambule ci-dessus est connu du document DE-A-2 655 946. Dans le circuit décrit par ce document, il est possible de connecter, au moyen d'un interrupteur électronique, une capacité de S additionnelle pour adapter le circuit lorsque l'on désire modifier la fréquence lignes (dispositif multistandard). Un problème se présente du fait qu'il y a des tensions élevées, à la fois continues et alternatives, aux deux bornes du condensateur de S, alors qu'on préfère utiliser, en général, dans un interrupteur électronique, au moins une tension proche de la masse. Ce problème est résolu selon ce document en connectant la capacité additionnelle au moyen d'un transformateur.

Un objet de l'invention est de résoudre le même problème que celui exposé dans l'art antérieur, en éliminant le coûteux transformateur.

A cet effet :
- dans la première branche, le bobinage déviateur est placé entre la borne active de l'élément interrupteur principal et la première capacité de S,
- dans la seconde branche, la capacité de S additionnelle est connectée au point commun entre le bobinage déviateur et la première capacité de S, et la cathode du thyristor est connectée au point, dit point médian, commun aux deux diodes du modulateur, via une diode dite série qui est connectée à la cathode du thyristor en cascade avec lui et avec le même sens passant,
- une première résistance est branchée entre le point médian et la gâchette du thyristor,
- une deuxième résistance est branchée entre la gâchette du thyristor et la cathode du thyristor,
- et une troisième résistance est branchée entre la cathode du thyristor et la masse.

L'invention est donc basée, entre autres, sur l'idée d'isoler la cathode du thyristor, au moyen d'une diode série, par rapport aux tensions élevées qui sont présentes au point médian, ce qui permet de déclencher le thyristor en appliquant à sa gâchette une impulsion liée au retour du balayage lignes au moyen d'un simple diviseur à résistances.

Avantageusement, le circuit comporte, pour contrôler le thyristor, un transistor de commande dont le trajet principal de courant relie la gâchette du thyristor à la masse.

Ainsi le thyristor est contrôlé de façon économique.

De préférence, le circuit comprend une diode dite parallèle, en parallèle avec l'ensemble fait du thyristor et de la diode série, diode parallèle dont le sens passant est inverse de celui de cet ensemble.

Ainsi la capacité de S additionnelle peut être active pendant toute la durée du balayage "aller".

La diode parallèle est avantageusement shuntée par une résistance.

Ceci évite des pics de courant dans le thyristor, au démarrage de l'appareil.

L'invention concerne aussi un appareil d'affichage d'images équipé d'un dispositif selon l'invention.

Ces aspects de l'invention ainsi que d'autres aspects plus détaillés apparaîtront plus clairement grâce à la description suivante d'un mode de réalisation constituant un exemple non limitatif.

La figure unique représente un exemple de schéma d'un circuit selon l'invention.

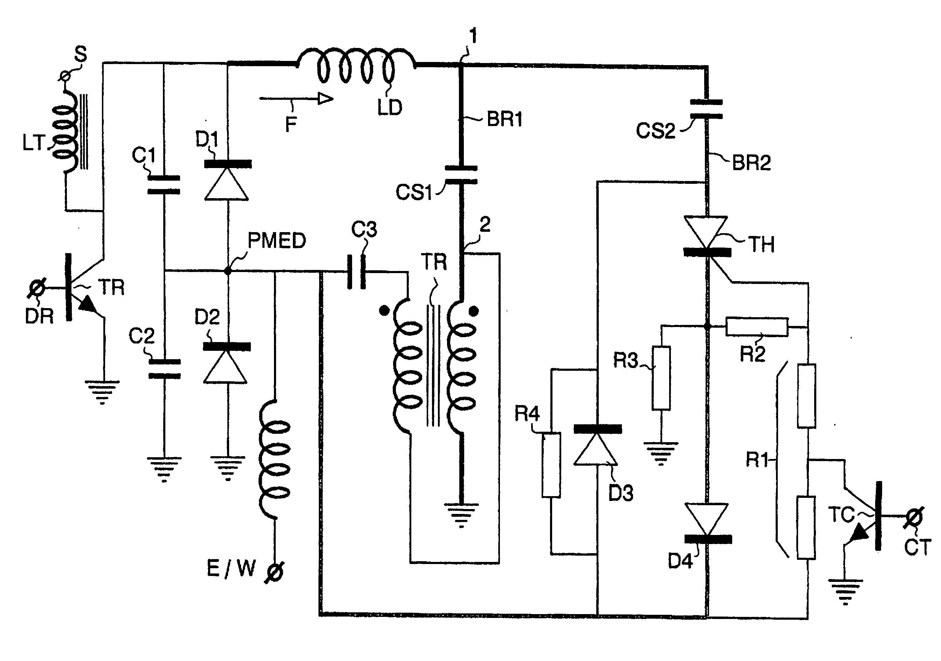

Le circuit de balayage horizontal, dit modulateur à diodes, représenté par la figure 1 comprend un élément interrupteur principal, ici un transistor TR de type NPN, commandé de façon connue à fréquence lignes par un signal appliqué sur une entrée DR, avec une borne active constituée par son collecteur, et une borne connectée à la masse, à savoir son émetteur. Son collecteur est relié à une source S de tension d'alimentation positive par l'enroulement primaire LT d'un transformateur connu dit "transformateur lignes", dont les autres enroulements ne sont pas représentés. En parallèle avec le transistor TR sont branchées deux diodes D1 et D2 connectées en cascade en sens inverse par rapport au sens direct du transistor TR, c'est-à-dire que la cathode de D1 est reliée au collecteur de TR et l'anode de D2 est connectée à la masse. Leur point commun est référencé PMED.

Une capacité C1 et une capacité C2, dites "de retour", sont connectées en parallèle respectivement avec D1 et D2. En variante, il est connu aussi de placer la capacité C2 entre le collecteur de TR et la masse.

Une première branche BR1, connectée entre le collecteur du transistor TR et la masse, comporte en cascade un bobinage déviateur LD, une première capacité CS1 dite de S reliée, au point 2, à une self-inductance constituée par un enroulement d'un transformateur TR. Le bobinage déviateur LD est placé entre le collecteur du transistor TR et la capacité CS1. Un autre enroulement, dit secondaire du transformateur TR, est ici branché au point 2, en série avec le primaire. Son extrémité où se produit la tension la plus élevée est reliée par une capacité C3 au point PMED. En variante, le bobinage secondaire pourrait être connecté à la masse au lieu d'être en série avec le primaire (le nombre de tours serait alors différent). La capacité C3 peut être placée d'un côté ou de l'autre de l'enroulement secondaire. Dans encore une autre variante, une simple self-inductance est parfois utilisée au lieu du transformateur, et la capacité C3 est alors branchée au point 2. Toutes ces variantes sont compatibles avec l'invention.

Une entrée E/W permet l'application au point PMED, via une self-inductance d'arrêt, d'une tension de réglage de l'amplitude de ligne et d'une tension modulée en forme de parabole, dite "correction est/ouest", qui peuvent moduler l'amplitude du courant dans LD sans modifier la hauteur des impulsions dans LT, c'est-à-dire sans modifier les tensions engendrées au moyen du transformateur lignes.

Les éléments décrits jusqu'ici sont les constituants habituels d'un montage "modulateur à diodes", qui est connu et par conséquent ne nécessite pas plus d'explications.

Une seconde branche BR2 comporte, en cascade, une capacité de S additionnelle CS2, un thyristor TH, ayant pour fonction de mettre en service ou non cette capacité de S additionnelle CS2, et une diode D4, dite diode série. La capacité CS2 est connectée d'un côté au point commun 1 entre le bobinage déviateur LD et la capacité CS1, et de l'autre côté à l'anode du thyristor TH. La diode D4 a son anode connectée à la cathode du thyristor TH, et sa cathode connectée au point PMED.

Une première résistance R1 est branchée entre le point médian PMED et la gâchette du thyristor, une deuxième résistance R2 est branchée entre la gâchette et la cathode du thyristor, et une troisième résistance R3 est branchée entre la cathode du thyristor et la masse.

La résistance R1 est constituée en deux parties avec un point intermédiaire. Pour bloquer le thyristor lorsqu'on ne désire pas mettre en service la capacité CS2, le trajet principal de courant d'un transistor de commande TC est branché entre le point intermédiaire de la résistance R1 et la masse. Ce transistor est rendu conducteur ou est coupé, au moyen d'un signal appliqué sur une entrée CT. En variante, il pourrait aussi être branché directement à la gâchette du thyristor.

Une diode D3, dite diode parallèle, est connectée en parallèle avec l'ensemble fait du thyristor TH et de la diode série D4, diode parallèle dont le sens passant est inverse de celui de cet ensemble, c'est-à-dire que sa cathode est reliée à l'anode du thyristor, et son anode est reliée à la cathode de D4. La diode parallèle D3 est shuntée par une résistance R4.

Le fonctionnement de ce montage est le suivant :
- lorsque le transistor TC est rendu conducteur sous la commande de la tension CT, il impose la tension de la masse au milieu de R1, et par ailleurs la cathode de TH est aussi reliée à la masse par R3, donc le thyristor est bloqué (le point PMED est toujours porté à une tension positive, de ce fait la diode D4 ne peut conduire que lorsque la cathode de TH est encore plus positive, ce qui n'est alors pas le cas).
- lorsque le transistor TC est bloqué, il n'impose aucune tension au milieu de R1. Lorsqu'une impulsion se produit en PMED à cause du retour lignes, elle est appliquée à l'ensemble des résistances R1, R2, R3 en série, qui constituent un diviseur de tension. La diode D4 est encore bloquée. La tension entre la gâchette et la cathode atteint, au milieu de la durée de l'impulsion de retour lignes, la valeur Vg = Vr (R2 / R1+R2+R3), où Vr est la tension maximale de l'impulsion en PMED. La valeur des résistances est déterminée pour que le thyristor soit alors rendu conducteur. Cet instant est favorable du fait que la tension aux bornes de l'ensemble {thyristor TH + diode D4} est faible à cet instant. Le thyristor et la diode deviennent donc conducteurs pendant la seconde moitié du temps de retour, puis pendant la première moitié du temps d'aller du balayage, le courant dans LD ayant le sens indiqué par la flèche F. Ensuite la diode D3 prend le relais pour la seconde moitié de l'aller du balayage, lorsque le courant change de sens.

## Revendications

1. Circuit de balayage horizontal, dit modulateur à diodes, pour un appareil d'affichage d'images, comprenant un élément interrupteur principal semi-conducteur (TR) avec une borne active et une borne connectée à la masse, en parallèle avec deux diodes (D1, D2) connectées en cascade en sens inverse par rapport au sens direct de l'élément interrupteur principal, muni d'une première branche connectée entre la borne active de l'élément interrupteur principal et la masse, faite du montage en cascade d'un bobinage déviateur (LD), d'une première capacité (CS1) dite de S, et d'une self-inductance (TR), et muni d'une seconde branche, faite du montage en cascade d'une capacité (CS2) de S additionnelle et d'un thyristor (TH) pour mettre en service ou non cette capacité de S additionnelle, **caractérisé en ce que,**
- dans la première branche, le bobinage déviateur (LD) est placé entre la borne active de l'élément interrupteur principal et la première capacité (CS1) de S,
- la seconde branche est connectée,
- du côté de la capacité (CS2) de S additionnelle, au point commun (1) entre le bobinage déviateur et la première capacité (CS1) de S et,
- du côté de la cathode du thyristor (TH), au point, dit point médian (PMED), commun aux deux diodes (D1, D2) du modulateur, via une diode (D4) dite série qui est connectée à la cathode du thyristor en cascade avec lui et avec le même sens passant,
- une première résistance (R1) est branchée entre le point médian et la gâchette du thyristor,
- une deuxième résistance (R2) est branchée entre la gâchette du thyristor et la cathode du thyristor,
- et une troisième résistance (R3) est branchée entre la cathode du thyristor et la masse.

2. Circuit de balayage horizontal selon la revendication 1, **caractérisé en ce qu**'il comporte, pour contrôler le thyristor, un transistor (TC) dont le trajet principal de courant relie la gâchette du thyristor à la masse.

3. Circuit de balayage horizontal selon la revendication 1, **caractérisé en ce qu'**il comprend une diode (D3) dite parallèle, en parallèle avec l'ensemble fait du thyristor et de la diode série, diode parallèle dont le sens passant est inverse de celui de cet ensemble.

4. Circuit de balayage horizontal selon la revendication 3, **caractérisé en ce que** la diode parallèle est shuntée par une résistances (R4).

5. Appareil d'affichage d'images, **caractérisé en ce qu'**il est équipé d'un dispositif selon l'une quelconque des revendications précédentes.

## Patentansprüche

1. Horizontalablenkschaltung, als Diodenmodulator bezeichnet, für ein Bildanzeigegerät, mit einem Hauptunterbrecher-Halbleiterelement (TR) mit einer aktiven Klemme und einer mit der Masse verbundenen Klemme, parallel zu zwei in Kaskade, in bezug auf die direkte Richtung des Haupt-Unterbrecherelements in umgekehrter Richtung geschalteten Dioden (D1, D2), versehen mit einem ersten Zweig, zwischen der aktiven Klemme des Haupt-Unterbrecherelements und der Masse angeschlossen, bestehend aus der Kaskadenschaltung einer Ablenkspule (LD), einem ersten Kondensator (CS1), mit S bezeichnet, und einer Selbstinduktion (TR), und versehen mit einem zweiten Zweig, bestehend aus der Kaskadenschaltung eines zusätzlichen S-Kondensators und eines Thyristors (TH), um diesen zusätzlichen S-Kondensator in Betrieb zu nehmen oder nicht, **dadurch gekennzeichnet, dass**
- im ersten Zweig die Ablenkspule (LD) zwischen der aktiven Klemme und dem Haupt-Unterbrecherelement und dem ersten S-Kondensator (CS1) angebracht ist,
- der zweiten Zweig angeschlossen ist
- auf der Seite des zusätzlichen S-Kondensators (CS2), am gemeinsamen Punkt (1) zwischen der Ablenkspule und dem ersten S-Kondensator (CS1), und
- auf der Seite der Kathode des Thyristors (TH), am gemeinsamen, dem sogenannten Mittelpunkt (PMED) der beiden Dioden (D1, D2) des Modulators, über eine sogenannte Seriendiode (D4), die an die Kathode des Thyristors angeschlossen wird, in Kaskade mit ihm und in derselben Durchlassrichtung,
- ein erster Widerstand (R1) zwischen dem Mittelpunkt und dem Gate des Thyristors angeschlossen ist,
- ein zweiter Widerstand (R2) zwischen dem Gate des Thyristors und der Kathode des Thyristors angeschlossen ist,
- und ein dritter Widerstand (R3) zwischen der Kathode des Thyristors und der Masse angeschlossen ist.

2. Horizontalablenkschaltung nach Anspruch 1, **dadurch gekennzeichnet, dass** sie zur Steuerung des Thyristors einen Transistor (TC) enthält, dessen Haupt-Stromweg das Gate des Thyristors mit der Masse verbindet.

3. Horizontalablenkschaltung nach Anspruch 1, **dadurch gekennzeichnet, dass** sie eine sogenannte Paralleldiode (D3) enthält, parallel zu der aus dem Thyristor und der Seriendiode gebildeten Einheit, wobei die Durchlassrichtung dieser Paralleldiode umgekehrt zu der dieser Einheit ist.

4. Horizontalablenkschaltung nach Anspruch 3, **dadurch gekennzeichnet, dass** die Paralleldiode von einem Widerstand (R4) geshuntet wird.

5. Bildanzeigegerät, **dadurch gekennzeichnet, dass** es mit einer Vorrichtung nach einem beliebigen der vorhergehenden Ansprüche ausgerüstet ist.

## Claims

1. A circuit for horizontal scanning, referred to as diode modulator, for use in an image display apparatus, comprising a main semiconductor switching element (TR) with an active terminal and a terminal connected to ground, arranged in parallel with two diodes (D1, D2) connected in cascade in a direction opposite to the direct direction of the main switching element, provided with a first branch connected between the active terminal of the main switching element and ground, and consisting of the cascade arrangement of a deflection coil (LD), a first S capacitance (CS1) and an inductance (TR), and provided with a second branch consisting of the cascade arrangement of an additional S capacitance (CS2) and a thyristor (TH) for activating or deactivating said additional S capacitance, **characterized in that**
- in the first branch, the deflection coil is (LD) arranged between the active terminal of the main switching element and the first S capacitance (CS1),
- in the second branch
- the additional S capacitance (CS2) is connected to the common point (1) between the deflection coil and the first S capacitance (CS1) and,
- the cathode of the thyristor (TH) is connected to the median common point (PMED) of the two diodes (D1, D2) of the modulator via a series diode (D4) which is connected to the cathode of the thyristor in cascade with said thyristor and with the same pass direction,
- a first resistor (R1) is connected between the median point and the gate of the thyristor,
- a second resistor (R2) is connected between the gate of the thyristor and the cathode of the thyristor,
- and a third resistor (R3) is connected between the cathode of the thyristor and ground.

2. A horizontal scanning circuit as claimed in claim 1, **characterized in that**, for controlling the thyristor, the circuit comprises a control transistor (TC) whose main current path connects the gate of the thyristor to ground.

3. A horizontal scanning circuit as claimed in claim 1, **characterized in that** the circuit comprises a parallel diode (D3) arranged in parallel with the assembly comprising the thyristor and the series diode, which parallel diode has a pass direction inverse to that of said assembly.

4. A horizontal scanning circuit as claimed in claim 3, **characterized in that** the parallel diode is shunted by a resistor (R4).

5. An image display apparatus, **characterized in that** it is provided with a circuit as claimed in any one of the preceding claims.
